# EUROPÄISCHE PATENTSCHRIFT

(11) **EP 2 641 851 B1**
(45) Veröffentlichungstag und Bekanntmachung des Hinweises auf die Patenterteilung: **27.01.2021**
(21) Anmeldenummer: 13158094.6
(22) Anmeldetag: 07.03.2013
(51) Int. Cl.: B65F 1/00, G01F 23/00

(54) **Intelligentes Füllstandsmeldegerät und -system**
Intelligent fill level sensor device and system
Appareil et système de signalisation du niveau de remplissage intelligents

(30) Priorität: 23.03.2012 CH 4092012
(43) Veröffentlichungstag der Anmeldung: 25.09.2013
(73) Patentinhaber: Gfeller-Informatik AG, 3700 Spiez (CH)
(72) Erfinder: Gfeller, Peter, 3700 Spiez (CH)
(74) Vertreter: BOVARD AG

(56) Entgegenhaltungen:
- EP-A1- 0 626 569
- EP-A1- 1 482 285
- WO-A1-2011/058287
- WO-A1-2011/077187
- CH-A2- 701 677

## Beschreibung

### Technisches Gebiet der Erfindung

Die Erfindung bezieht sich auf die Messung und Meldung von Anhäufungen in Behältern oder freien Haufen verschiedenförmiger und verschiedenartiger Materialien an örtlich verteilten Sammelstellen, damit die Materialien in effizienten Zeitabständen abgeführt bzw. behandelt werden können. Insbesondere, jedoch nicht ausschliesslich, bezieht sich die Erfindung auf die Überwachung der Füllmenge von Abfallstoffen in Müllbehältern.

### Stand der Technik

Bei herkömmlichen Geräten werden z.B. die Einwürfe in einen Müllbehälter, etwa mittels einer Lichtschranke, detektiert und gezählt. Eine kumulative Einwurfzahl wird anschliessend an eine Steuerzentrale gemeldet. Die Meldungen werden von der Zentrale verwendet, um einen Müllabfuhrwagen über den Entleerungsbedarf jeden einzelnen Müllbehälters zu informieren. Auf dieser Weise kann vermieden werden, dass, zum Beispiel, ein Abfuhrwagen vergeblich zu einem leeren Müllbehälter fährt.

Es sind ebenfalls Geräte bekannt, welche den Füllstand messen und, auf Anfrage von einer Steuerzentrale bzw. von einem vorbeifahrenden Abfuhrwagen, ein Antwortsignal mit der gewünschten Füllstandsinformation an die Zentrale bzw. an den Wagen senden. Solche herkömmlichen Systeme sind in der Lage, den Füllstand eines Müllbehälters zum Zeitpunkt der Anfrage zu messen und zu melden.

Der abgefragte Füllstand eines Müllbehälters ist ein einfaches, und in manchen Fällen genügendes Mass, auf welchem die Entscheidung, zu entleeren oder nicht zu entleeren, basieren kann. Wo der Füllstand von einem vorbeifahrenden Wagen abgefragt wird, kann die Zeit für das unnötige Anhalten und Entleeren gespart werden. Wo die Füllstandswerte von einem zentralen System abgefragt werden, kann die Tourenplanung eines Abfuhrwagens optimiert werden, indem der Wagen nur zu denjenigen welche einen gewissen Füllstand (z.B. mehr als 50% voll) auf Anfrage gemeldet haben.

Die bekannten Systeme ermöglichen eine gewisse Verbesserung der Tourenplanung eines Abfuhrwagens, weil leere Behälter nicht vergeblich angefahren werden. Dennoch müssen solche Systeme mit relativ wenig Informationen die nächste Entleerungsrunde im Voraus planen. Daher bieten sie nur eine beschränkte Optimierung der Abfuhr. Ein solches System ist zum Beispiel in WO 2011/077187 beschrieben.

### Erfindungsaufgabe

Es ist eine Aufgabe der vorliegenden Erfindung, ein Gerät und ein System zur Verfügung zu stellen, welches unter anderem die oben genannten Nachteile des Standes der Technik überwinden. Insbesondere ist es eine Aufgabe der Erfindung, den Entleerungsbedarf des jeweiligen Behälters bzw. der jeweiligen Sammelstelle wesentlich präziser und/oder ausführlicher zu melden, damit eine höhere Optimierung der Abfuhr bzw. der Behandlung erfolgen kann.

### Kurze Beschreibung der Erfindung

Zu diesem Zweck sieht die Erfindung eine Einrichtung vor, welche zur Überwachung des Füllniveaus angehäufter, zu entleerender bzw. zu behandelnder Materialien in einem Behälter bzw. an eine Sammelstelle dient, wobei die Einrichtung:
mindestens einen ersten Niveausensor aufweist, mittels welchem ein aktuelles Füllniveau der Materialien ermittelbar ist,
eine Fernmeldeeinheit aufweist, mittels welcher ermittelte Füllniveaudaten an eine Steuerzentrale übertragbar sind,
eine Füllrate-Analyseeinheit zur Erfassung und/oder Ermittlung von mindestens einem Füllratenparameter aufweist, mittels welcher Füllrate-Analyseeinheit mindestens ein prognostizierter Füllparameter erstellbar ist, wobei der mindestens eine prognostizierte Füllparameter einen Zeitpunkt bzw. einen Zeitrahmen umfasst, an welchem Zeitpunkt bzw. in welchem Zeitrahmen das Füllniveau gemäss dem mindestens einen Füllratenparameter ein vorbestimmtes Füllniveau erreichen wird,
und wobei der mindestens eine prognostizierte Füllparameter mittels der Fernmeldeeinheit an die Steuerzentrale übertragbar ist.

Gemäss einer Variante der erfindungsgemässen Einrichtung umfasst der mindestens eine Füllratenparameter mindestens einen historischen, vom Niveausensor ermittelten Füllniveauwert der angehäuften Materialien und/oder einen saisonalen, und/oder einen zeit-, ort- oder umgebungbezogenen Füllratenparameter .

Gemäss einer weiteren Variante der erfindungsgemässen Einrichtung umfasst der mindestens eine prognostizierte Füllparameter ein Füllniveau, welches Füllniveau gemäss dem mindestens einen Füllratenparameter zu einem vorbestimmten Zeitpunkt bzw. in einem vorbestimmten Zeitrahmen erreicht wird.

Gemäss einer weiteren Variante der erfindungsgemässen Einrichtung ist die Fernmeldeeinheit so eingerichtet, dass, wenn der mindestens eine Füllparameter und/oder der prognostizierte Füllparameter einen vorbestimmten Wert erreicht, der prognostizierte Füllparameter an die Steuerzentrale übermittelt wird.

Gemäss einer weiteren Variante sieht die Erfindung eine Einrichtung vor, welche eine Steuerungs-Schnittstelle zur Steuerung eines Funktionsmoduls des Behälters aufweist, mittels welchem Funktionsmodul mindestens eine Funktion des Behälters bzw. der Sammelstelle betätigbar ist, wobei die Funktion ein Lenken, ein Sortieren, ein Verdichten, und/oder ein Schichten der genannten Materialien sein kann.

Gemäss einer weiteren Variante sieht die Erfindung eine Einrichtung vor, welche eine Daten-Schnittstelle zum Einlesen eines Freigabesignals aufweist, welches Freigabesignal eine Authentifizierung und/oder Zählimpulse aufweist.

Gemäss einer weiteren Variante der erfindungsgemässen Einrichtung ist das vorbestimmte Füllniveau ein "voll", ein "fast voll", ein "fast leer" oder ein "leer" Status.

Gemäss einer weiteren Variante der erfindungsgemässen Einrichtung ist mittels der Steuerungs-Schnittstelle mindestens einer der Modi "immer ein", "zyklisch ein", Wartungsmodus, Testmodus, Selbstdiagnose, Firmware Update und Software Update des Funktionsmoduls selektierbar.

Gemäss einer weiteren Variante sieht die Erfindung eine Einrichtung vor, welche eine Ein- bzw. Ausgabe Schnittstelle zur Verbindung mit einer Audioausgabeeinheit, einer Anzeigeeinheit, und/oder mit einer Eingabeeinheit aufweist.

Gemäss einer weiteren Variante der erfindungsgemässen Einrichtung ist die Fernmeldeeinheit so eingerichtet, dass sie die Übertragung von Füllparametern automatisch und/oder auf Abruf tätigen kann.

Gemäss einer weiteren Variante sieht die Erfindung eine Einrichtung vor, welche eine Kommunikationsschnittstelle zum Datenaustausch mit anderen ähnlichen Einrichtungen aufweist, wobei Füllniveaudaten der anderen Einrichtungen mittels der genannten Fernmeldeeinheit an die Steuerzentrale übertragbar sind.

Die Erfindung sieht ebenfalls ein System zur Überwachung des Füllniveaus angehäufter, zu entleerender bzw. zu behandelnder Materialien in einer Mehrzahl von Behältern bzw. Sammelstellen vor, wobei das System:
eine Mehrzahl von Überwachungseinrichtungen aufweist, mittels welchen die aktuellen Füllniveaus der Materialien in jedem Behälter bzw. in jeder Sammelstelle ermittelbar sind,
eine Steuerzentrale zur Steuerung der genannten Entleerung bzw. Behandlung der Materialien aufweist, wobei:
   die Steuerzentrale eine Optimierungseinheit zur Optimierung des Verlaufs der genannten Entleerung bzw. Behandlung der Materialien aufweist,
   mindestens eine der Überwachungseinrichtungen eine Fernmeldeeinheit aufweist, mittels welcher ermittelte Füllniveaudaten an die Steuerzentrale übertragbar sind,
   jede der Überwachungseinrichtungen so eingerichtet ist, dass sie einen prognostizierten Füllparameter des entsprechenden Behälters bzw. der entsprechenden Sammelstelle ermitteln kann,
   die prognostizierten Füllparameter mittels der mindestens einen Fernmeldeeinheit an die Steuerzentrale übertragbar sind, und
   die Optimierungseinheit so eingerichtet ist, dass der genannte Verlauf gemäss der prognostizierten Füllparameter optimierbar ist.

Gemäss einer Variante des erfindungsgemässen Systems weist die Steuerzentrale eine Abrufeinheit auf, mittels welcher die prognostizierten Füllparameter von den Überwachungseinrichtungen abrufbar sind, und
die Optimierungseinheit so eingerichtet ist, dass der optimierte Verlauf nur diejenigen der Überwachungseinrichtungen umfasst, die gemäss der prognostizierten Füllparameter zu einem geplanten Entleerungs- bzw. Behandlungszeitpunkt entleerungs- bzw. behandlungsbedürftig sein werden.

Gemäss einer Variante des erfindungsgemässen Systems weist jede der Überwachungseinrichtungen eine Kommunikationsschnittstelle zum Datenaustausch mit einer oder mehreren der anderen Überwachungseinrichtungen auf, wobei ermittelte Füllniveaudaten und/oder prognostizierte Füllparameter unter die Überwachungseinrichtungen übertragbar sind, und wobei die prognostizierten Füllparameter zweier oder mehrerer Überwachungseinrichtungen mittels der Fernmeldeeinheit einer der Überwachungseinrichtungen an die Steuerzentrale übertragbar sind.

### Detaillierte Beschreibung der Erfindung

Die erfindungsgemässe Einrichtung und System werden nachfolgend anhand der beiliegenden Zeichnungen beispielhaft näher erläutert, in welcher:
Figur 1 in perspektivischer, schematischer Ansicht einen Müllsammelbehälter mit einer erfindungsgemässen Füllstandsmeldeeinrichtung zeigt.
Figur 2 in schematischer Planansicht den Müllsammelbehälter von Figur 1 zeigt.
Figur 3 in schematischer Ansicht ein Beispiel eines erfindungsgemässen Systems zeigt.
Figur 4 zeigt in schematischer, funktioneller Ansicht ein Beispiel eines erfindungsgemässen Systems.

Die beigefügten Zeichnungen sind lediglich als illustrative Beispiele vorgesehen, welche dem besseren Verständnis der Erfindung dienen. Sie stellen keine Einschränkung der beanspruchten Erfindung dar. In diesen Zeichnungen werden gleiche Bezugszeichen für identische oder funktionsähnliche Elemente verwendet.

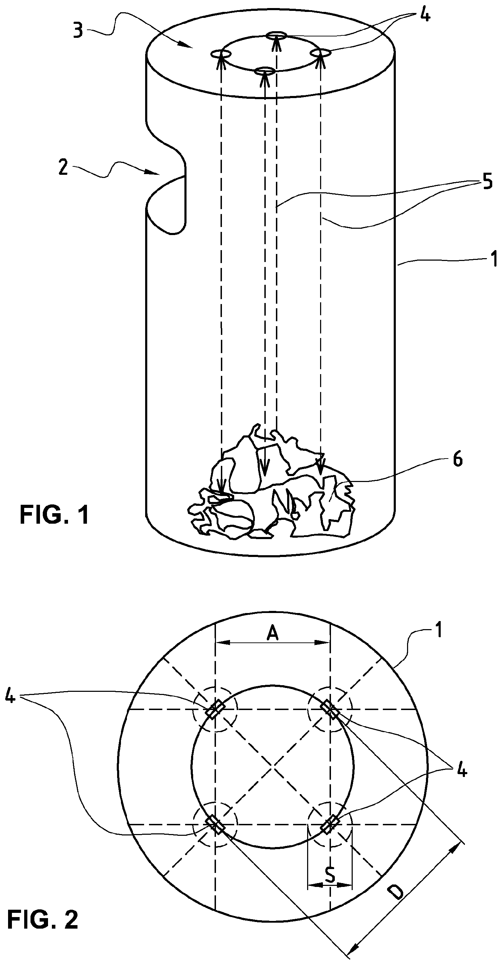

Figur 1 zeigt einen Behälter 1, etwa einen Müllbehälter, mit einem zylindrischen Körper, einer Einwurföffnung 2, und einer Füllstandmessvorrichtung 3, welche vier Sensoren 4 aufweist. Die Füllstandmessvorrichtung 3 wird im nachstehenden Text auch Füllstandsmeldegerät genannt.

Im Behälter 1 befinden sich angehäufte, etwa von Passanten eingeworfene Abfallmaterialien 6. Die Sensoren 4 können jeweils, z.B. mittels Infrarotstrahlen 5, einen senkrechten Abstand zu einem Teil der Mülloberfläche ermitteln.

Die verschiedenen funktionellen Teile der Füllstandmessvorrichtung 3 sind in den Figuren 1 und 2 nicht abgebildet. Sie werden jedoch vorzugsweise in einem gemeinsamen Gehäuse mit dem bzw. den Abstandsensoren 4 untergebracht, damit die Gesamtheit als eine Einbaueinheit einfach und handlich in dem oberen Bereich des Behälters 1 befestigt werden kann.

Figur 2 zeigt in Planansicht, wie die z.B. vier Sensoren 4 vorzugsweise über das innere Volumen des Behälters 1 verteilt sein können. Jeder Sensor misst einen Bereich (mit Durchmesser S) der Oberfläche der Materialien 6. Die orthogonalen und diagonalen Abstände zwischen den Sensoren sind mit A und D bezeichnet.

Das intelligente Füllstandsmeldegerät 3 bildet die Oberfläche des angehäuften Materials näherungsweise ab und berechnet den Füllstand z.B. in Zentimeter oder als ein Prozentanteil. Ist ein vorgegebenes Niveau erreicht, werden ein oder mehrere Füllparameter an das Servicezentrum gemeldet, wo die Informationen in die Tourenplanung einfliessen und wo eine optimale Route und/oder der optimale Zeitpunkt des Tourenstarts berechnet werden. Beispiele solcher Füllparameter sind: aktueller Füllstand (in cm oder als Prozentanteil), das prognostizierte nächste Niveau bzw. die Zeit, in welcher dieses gemäss der Füllratenparameter erreicht wird, oder das prognostizierte "Voll"-Niveau bzw. die Zeit, in welcher dieses gemäss der Füllratenparameter erreicht wird.

Das intelligente Füllstandsmeldegerät 3 kann seine Messintervalle an die Tageszeit, an den Wochentag, an den aufgezeichneten Messdaten und an die Geschwindigkeit der Anhäufung aus vorangehenden Messungen anpassen. Damit kann die Lebensdauer der autonomen Stromquelle (Batterie, Akku) erheblich verlängert werden, ohne dass wesentliche Lücken bei der Informationslieferung an das Servicezentrum entstehen.

Wenn innerhalb einer vordefinierten Zeitperiode kein neues Niveau erreicht wird, kann das intelligente Füllstandsmeldegerät 3 bei Ablauf dieser Zeitperiode selbständig eine Statusmeldung zum Servicezentrum übermitteln, um seine Funktionstüchtigkeit mitzuteilen.

Das intelligente Füllstandsmeldegerät 3 erkennt, wenn eine Messstelle 4 über längere Zeit immer die gleichen Niveaudaten abliest, während die anderen drei Messstellen 4 variieren. Dann wird die defekte oder verschmutzte Messstelle 4 softwaremässig markiert und nicht mehr in die Füllstandsberechnung einbezogen. Das Füllstandsmeldegerät 3 setzt sofort eine Fehlermeldung an das Servicezentrum ab.

Das Füllstandsmeldegerät 3 kann vorzugsweise auf vier (oder ein Mehrfaches von vier) quadratisch angeordneten Messstellen 4 basieren (bestehend jeweils aus einem Sender und einem Empfänger), welche die Oberfläche der Materialien 6 so gut als möglich nachbilden und einen Füllstand in Zentimeter daraus errechnet.

Das Füllstandsmeldegerät 3 kann z.B. eine programmierbare Steuerung umfassen, sowie eine Steuerungseinheit, einen Kommunikationsteil, eine Antenne, eine Stromversorgung (z.B. eine Batterie) und eine Mehrzahl von autonomen Infrarot- oder Ultraschall-Messstellen 4 (jeweils Sender und Empfänger direkt beieinander). Die Sensoren 4 können im gleichen Gehäuse oder ausserhalb des Gehäuses auf der gleichen Ebene oder auf verschiedenen Ebenen angebracht sein.

Das Füllstandsmeldegerät 3 wird vorzugsweise vor dem ersten Gebrauch kalibriert. Eine Kalibrierung ist normalerweise nötig, um ungleiche Distanzen zwischen Messstelle 4 und Messebene bei vordefinierten Montagewinkeln (Gerätemontage an einer schrägen Fläche) auszugleichen, und um Signalunterschiede der Messstellen 4 zu korrigieren. Pro Messstelle 4 wird ein Korrekturfaktor ermittelt und aufgezeichnet.

Eine Messstelle 4 kann eine autonom funktionierende Einheit sein, welche z.B. aus einer Sende- und einer Empfangs-Einheit besteht (z.B. Infrarot, Ultraschall, optische Bildverarbeitung). Die Messstellen 4 können z.B. quadratisch angeordnet sein. Jede Messstelle 4 hat eine eingeschränkte Messfläche (Spot) mit dem Durchmesser S, welche eine Messstelle 4 jeweils abdeckt. Die in Figur 2 abgebildete diagonale Distanz D kann so gewählt sein, dass der grösste annehmbare Materialteil 6 in seiner Breite kleiner ist als D minus S/2. Diese Formel basiert auf der gewollten Nicht-Einhaltung des Nyquist-Shannon-Abtasttheorems. Die Materialgrösse wird durch die Grösse der Einwurföffnung 2 eines Behälters 1 begrenzt.

Es können z.B. vier Niveaus im Füllstandsmeldegerät vorbestimmt werden, die eine Meldung zum Servicezentrum auslösen sollen: NL (Niveau LEER), NT (Niveau TIEF), NW (Niveau WARNUNG) und NV(Niveau VOLL). Selbstverständlich sind auch andere Niveauklassierungen möglich.

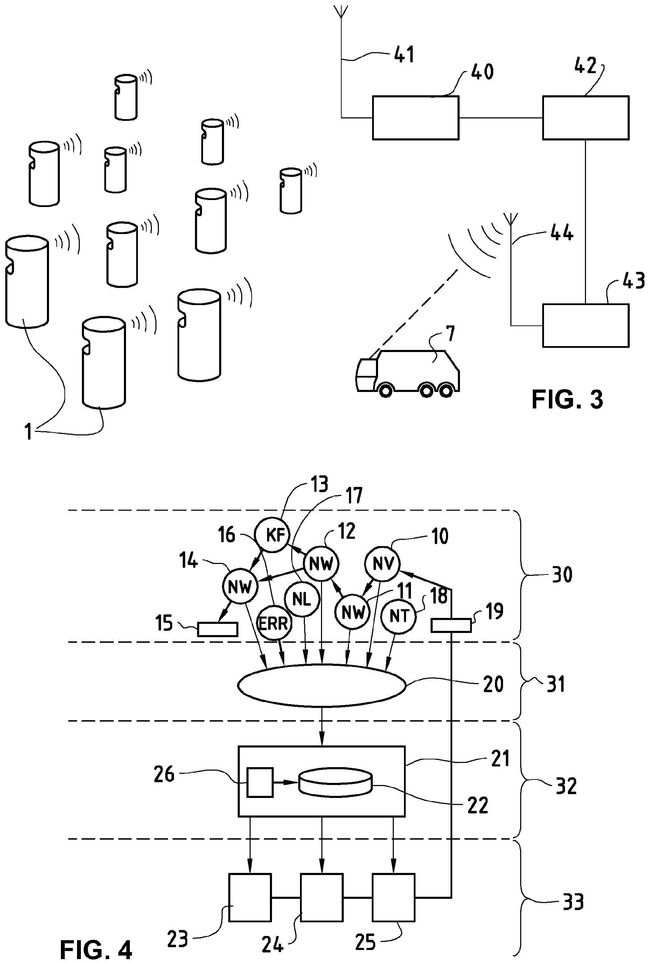

Die Figur 3 zeigt eine vereinfachte Übersicht einiger der wichtigsten Bestandteile des beispielhaften Systems. Es sind eine Mehrzahl von Behältern 1 abgebildet, welche z.B. drahtlos mit einer Kommunikationseinheit 40, 41 der Steuerzentrale 42 (auch Servicezentrum genannt) kommunizieren. Diese Kommunikation kann zum Beispiel per Funk oder über ein übliches Mobilnetz erfolgen. Die Verbindung kann auch über ein Festnetz oder per optischer Strahlen bzw. Verbindungen erfolgen.

In der Figur 3 sind die Behälter 1 beispielhaft jeweils mit einer eigenen Fernmeldeeinheit ausgestattet. Die Behälter 1 können jedoch gruppiert sein, damit eine Gruppe von Behältern 1 eine einzige Fernmeldeeinheit teilen. In diesem Fall können die Behälter auch mit einem Kommunikationsgerät ausgestattet sein, welches einen Datenaustausch zwischen den Behältern 1 ermöglicht.

In dieser Beschreibung ist unter dem Begriff "Behälter" auch eine offene Anhäufung von Materialien zu verstehen. Müllbehälter sind als Beispiel genommen, aber die Prinzipien der Erfindung lassen sich genauso gut bei jeder Anhäufung oder Ansammlung von Materialien anwenden, welche z.B. abgeführt, nachgefüllt oder sonst behandelt werden sollen, wenn die Menge der Materialien einen gewissen Wert erreicht. Dieser Wert kann ein vorbestimmtes niedriges Niveau sein, unter welchem die Materialien nachgefüllt werden sollen, oder er kann ein vorbestimmtes hohes Niveau sein, über welchem die Materialien z.B. entleert werden sollen.

Da die Anhäufung von Materialien in Sammelstellen oft in zufälligen Zeitabständen erfolgt, können herkömmliche Überwachungsvorrichtungen nicht voraussagen, zu welcher Zeit in der Zukunft eine Anhäufung eines bestimmten Niveaus wahrscheinlich erreicht sein wird.

Der Niveaumesswert alleine bietet nur einen simplen Parameter für die Abschätzung des Entleerungs- bzw.- Behandlungsbedarfs bei der Tourenplanung für z.B. einen Abfuhrwagen. Ein Behälter 1, der 70% voll ist, aber gegenwärtig kaum oder sehr langsam gefüllt wird, bedarf z.B. keiner eiligen Leerung. Ein Behälter 1, hingegen, welcher gerade erst entleert worden ist, aber welcher direkt vor einem Schnellrestaurant steht, dürfte, je nach Wetter und Tageszeit, schnell wieder voll sein.

Das hier beschriebene System will einen bedarfsorientierten und effizienten Einsatz von Leerpersonal erreichen, indem aktuelle Füllstände (bzw. Leerstände) aber auch weitere Parameter, wie z.B. prognostizierte Niveaus aufgrund von z.B. Erfahrungswerten oder Wochentagen für die Tourenplanung einbezogen werden.

Jedes der Füllstandsmeldegeräte können z.B. den Füllstand in genügender Genauigkeit selbstständig messen und aus gesammelten Informationen eine Prognose über die Zeitdauer, z.B. bis zum Erreichen der Füllstand-Niveaus "FAST VOLL" bzw. "VOLL" errechnen und an die Zentrale 42 melden.

Die Füllstandsmeldegeräte können auch so konfiguriert werden, dass Meldungen und Prognosen über die Leerstand-Niveaus "FAST LEER", "LEER" errechnet und gemeldet werden. Sie können z.B. in einem Mindestintervall mit dem Servicezentrum (Zentrale) 42 kommunizieren, um ihre jeweilige Funktionstüchtigkeit nachzuweisen und eventuelle Befehle auszuführen.

Die Füllstandsmeldegeräte können eine lokale Ausgabeschnittstelle aufweisen, die Aktionen in externen autonomen Modulen wie zum Beispiel zum Lenken, Sortieren, Verdichten und/oder Schichten auslösen kann. Damit lässt sich das Material im Behälter / in den Behältern lokal optimal einlagern.

Die Füllstandsmeldegeräte können vorzugsweise eine lokale Eingabeschnittstelle aufweisen, die Zählimpulse (z.B. pro Einwurf ein Impuls) für die Prognostizierung oder die optimale Einlagerung von Material in den Behältern empfangen kann.

Die Füllstandsmeldegeräte können z.B. auch Authentifizierungsinformationen bzw. Freigabeimpulse empfangen, um z.B. Einwurfklappen nur für berechtigte Benutzer zu entriegeln. Damit wird auch eine Kostenverrechnung oder eine Nachverfolgung des Materialeinwurfs ermöglicht.

Unter dem Begriff "Füllratenparameter" sind jegliche z.B. messbare ermittelbare Parameter, welche einen Einfluss auf die Anhäuf- bzw. Entleerungsrate der Materialien 6 haben können, zu verstehen. Ausser der schon erwähnten Parameter könnten auch weitere Parameter berücksichtigt werden, wie z.B.: die Feuchtigkeit, die Materialbeschaffenheit, die Temperatur, die Tageszeit, der Wochentag, die Wetterprognose, Daten aus einem Anlasskalender, die Entfernung und/oder die Anzahl weiterer Behälter in der Gegend, Standortinformationen, Informationen zur verfügbaren Standortausrüstung, oder ein oder mehrere historische Niveauwerte, welche z.B. vom Füllstandsmeldegerät abgespeichert werden können.

Die Füllstandsmeldegeräte können nebst der Ablesung der aktuellen Füllstände auch die verbleibende Zeit berechnen, bis ein bestimmtes Niveau in der Zukunft erreicht wird. D.h. die Einrichtung kann z.B. aufgrund von gespeicherten, empfundenen und/oder gemessenen Füllstandswerten von Datum und Zeit sowie den Kalender- und Wochentagen, saisonal unterschiedlich prognostizieren.

Auf diese Weise kann das Füllstandsmeldegerät 3 eine optimale Routenplanung und/oder einen optimalen Zeitpunkt für den Einsatz von Leerpersonal, Fahrzeugen und Infrastrukturen ermöglichen. Zudem ermöglicht der Einsatz von solchen Füllstandsmeldegeräten eine bessere Standortplatzierung von Sammelstellen.

Das Prognostizierungsverfahren lässt sich anhand der Figur 4 besser verstehen. Das Verfahren dient z.B. zur Bestimmung eines Zeitpunktes in der näheren Zukunft, wann ein bestimmtes Niveau erreicht wird, oder die Zeitdauer bis zur voraussichtlichen Erreichung bestimmter Niveaus. Es wird mit Hilfe von mathematischen Verfahren (z.B. exponentielle Glättung, Statistik, Wahrscheinlichkeits-Rechnung, Warteschlangentheorie) und unter Einbezug verschiedener Füllratenparameter bestimmt. Diese können z.B. sein: aufgezeichnete Füllstandsmesswerte, Kalenderdaten, aktuelles Datum, aktuelle Zeit, Wochentag, Häufigkeit und Stärke von Füllstandsveränderungen innerhalb einer bestimmten Zeiteinheit, weitere Informationen über z.B. besonderes Benützungsaufkommen, bereitgestellt vom Servicezentrum. Die Form des Behälters (z.B. mathematisch definiert) kann auch berücksichtigt werden, sowie Standortinformationen, Informationen zur verfügbaren Standortausrüstung usw.

Das Gesamtsystem besteht aus mehreren dezentral verteilten Füllstandsmeldegeräten 30 in Behältern 1 bzw. an Sammelstellen, und ein Servicezentrum (zentraler Computer mit Füllstandsmanagement Software) 32.

Der Servicezentrum umfasst z.B. die Module: Datenkommunikation, Datenspeicherung, Datenauswertung, Cockpit, Systemüberwachung, Konfigurationsmanagement, Datenschnittstellen.

Die Kommunikation 20 zwischen dem Servicezentrum und den Füllstandsmeldegeräten 30 erfolgt z.B. drahtlos, und das Kommunikationsnetz kann z.B. sternförmig organisiert sein.

Im vorliegenden Beispiel meldet jedes der Füllstandsmeldegeräte drahtlos eine Niveauänderung (NW, NV, NT oder NL, zum Beispiel), oder eine Störung (ERR) an das Servicezentrum 32, wo die Daten gespeichert und zur Weiterverwendung aufbereitet worden sind. In der Fig. 3 ist ein Behälter 13 ohne Füllstandsmeldegerät mit KF bezeichnet.

Ein Disponent plant die Einsätze mittels Planungseinheit 21 (die Planungseinheit wird in diesem Text auch Optimierungseinheit genannt). Die von der Planungseinheit 21 aufbereiteten Informationen werden über verschiedene Kommunikationsmittel wie Smart Phone 23 oder World Wide Web 24 den Nutzern direkt mitgeteilt oder via Datenschnittstelle 25 zu anderen Computersystemen (z.B. Tourenplanung) geleitet, welche den optimalen Ressourcen-Einsatz bei der Leerungstour sicherstellen.

Im Beispiel von der Figur 4 empfängt die Optimierungseinheit 32 Füllparameter von den Behältern bzw. Sammelstellen 10, 11, 12, 14 und 16 bis 18, und erzeugt einen optimierten Entleerungsplan 19. In diesem Beispiel sollen nur gewisse Behälter entleert werden (z.B. diejenigen, die NW oder NV gemeldet haben). Behälter, die "NT oder "ERR" oder "NL" gemeldet haben, werden nicht angefahren. Der Behälter 13 hat kein Füllstandsmeldegerät und wird in regelmässigen Zeitabständen entleert. Falls die geplante Entleerungstour in eine dieser Zeitspannen fällt, wird der Behälter 13 in die Tourenplanung aufgenommen.

Die Planungseinheit 21 des Servicezentrums 32 ist z.B. eine Rechnereinheit zur optimalen Planung der Leerungseinsätze, mit Datenbank 22 und zusätzlichen Parameterspeicher 26. Im Parameterspeicher 26 können Optimierungsparameter abgelegt werden, wie z.B. eine Liste der Behälter, welche kein Füllstandsmeldegerät aufweisen.

Die Rechnereinheit 21 bezieht einen oder mehrere der folgenden Parameter ein, um die Einsatzplanung des Disponenten zu erleichtern: Wetterlage, Wettervorhersage, das zur Verfügung stehende Personal, die zur Verfügung stehenden Personal-Fahrzeuge, vordefinierte Standardtouren und deren Varianten, Füllstandswerte und Füllstandsprognosen pro Füllstandsmeldegerät bzw. pro Gruppe von Füllstandsmeldegeräten, Kalender (wie z.B. lokale Anlässe), aktuelles Datum und Zeit, Standortkoordinaten der jeweiligen Behälter, z.B. in Zusammenhang mit einem externen geografischen Informationssystem.

Das Servicezentrum 32 kann die Füllstandsmeldegeräte 10, 11, 12, 14 und 16 bis 18, sowie Abfallbehälter ohne Füllstandsmeldegerät (wie z.B. 13) verwalten und konfigurieren. Zum Beispiel kann sich jedes neu in Betrieb genommene Füllstandsmeldegerät beim Servicezentrum mit seinem eindeutigen Identifikationscode selbständig und mit seinem Zustand und seiner Grundkonfiguration anmelden. Damit wird die Stammdaten-Verwaltung automatisch nachgeführt.

Der Systemadministrator teilt dem Füllstandsmeldegerät mit, in welchen Behältertyp das Gerät eingebaut wird. Bei der nächsten (z.B. periodischen) Kommunikation liest das Füllstandsmeldegerät die im Servicezentrum liegende neue Konfiguration für sich ab und lädt diese. Damit können die gleichen Füllstandsmeldegeräte in unterschiedlichen Behältern mit unterschiedlichen Abmessungen eingesetzt werden. Ein ausser Betrieb genommenes Füllstandsmeldegerät wird in der Füllstandsmeldegeräteverwaltung entsprechend gelöscht.

## Patentansprüche

1. Einrichtung (3) zur Überwachung des Füllniveaus angehäufter, zu entleerender bzw. zu behandelnder Materialien (6) in einem Behälter (1) bzw. an eine Sammelstelle, wobei die Einrichtung (3):
mindestens einen ersten Niveausensor (4) aufweist, mittels welchem ein aktuelles Füllniveau der Materialien (6) ermittelbar ist,
eine Fenmeldeeinheit aufweist, mittels welcher ermittelte Füllniveaudaten an eine Steuerzentrale (21, 42) übertragbar sind,
**dadurch gekennzeichnet, dass**
die Einrichtung (3) eine Füllrate-Analyseeinheit (21) zur Erfassung und/oder Ermittlung von mindestens einem Füllratenparameter aufweist, mittels welcher Füllrate-Analyseeinheit mindestens ein prognostizierter Füllparameter erstellbar ist, wobei der mindestens eine prognostizierte Füllparameter einen Zeitpunkt bzw. einen Zeitrahmen umfasst, an welchem Zeitpunkt bzw. in welchem Zeitrahmen das Füllniveau gemäss dem mindestens einen Füllratenparameter ein vorbestimmtes Füllniveau erreichen wird, und
der mindestens eine prognostizierte Füllparameter mittels der Fernmeldeeinheit an die Steuerzentrale (21, 42) übertragbar ist.

2. Einrichtung (3) gemäss Anspruch 1, wobei der mindestens eine Füllratenparameter mindestens einen historischen, vom Niveausensor (4) ermittelten Füllniveauwert der angehäuften Materialien 6 und/oder einen saisonalen, und/oder einen zeit-, ort- oder umgebungbezogenen Füllratenparameter umfasst.

3. Einrichtung (3) gemäss einem der Ansprüche 1 oder 2, wobei der mindestens eine prognostizierte Füllparameter ein Füllniveau umfasst, welches Füllniveau gemäss dem mindestens einen Füllratenparameter zu einem vorbestimmten Zeitpunkt bzw. in einem vorbestimmten Zeitrahmen erreicht wird.

4. Einrichtung (3) gemäss einem der Ansprüche 1 bis 3, wobei die Fernmeldeeinheit darauf ausgelegt ist, wenn der mindestens eine Füllparameter und/oder der prognostizierte Füllparameter einen vorbestimmten Wert erreicht, den prognostizierten Füllparameter an die Steuerzentrale (42) zu übermitteln.

5. Einrichtung (3) gemäss einem der Ansprüche 1 bis 4, welche eine Steuerungs-Schnittstelle zur Steuerung eines Funktionsmoduls des Behälters (1) aufweist, mittels welchem Funktionsmodul mindestens eine Funktion des Behälters (1) bzw. der Sammelstelle betätigbar ist, wobei die Funktion ein Lenken, ein Sortieren, ein Verdichten, und/oder ein Schichten der genannten Materialien (6) ist.

6. Einrichtung (3) gemäss einem der Ansprüche 1 bis 5, welche eine Daten-Schnittstelle zum Einlesen eines Freigabesignals aufweist, welches Freigabesignal eine Authentifizierung und/oder Zählimpulse aufweist.

7. Einrichtung (3) gemäss einem der Ansprüche 1 bis 6, wobei das vorbestimmte Füllniveau ein "voll", ein "fast voll", ein "fast leer" oder ein "leer" Status ist.

8. Einrichtung (3) gemäss einem der Ansprüche 1 bis 7, wobei mittels der Steuerungs-Schnittstelle mindestens einer der Modi "immer ein", "zyklisch ein", Wartungsmodus, Testmodus, Selbstdiagnose, Firmware Update und Software Update des Funktionsmoduls selektierbar ist.

9. Einrichtung (3) gemäss einem der Ansprüche 1 bis 8, welche eine Ein- bzw. Ausgabe Schnittstelle zur Verbindung mit einer Audioausgabeeinheit, einer Anzeigeeinheit, und/oder mit einer Eingabeeinheit aufweist.

10. Einrichtung (3) gemäss einem der Ansprüche 1 bis 9, wobei die Fernmeldeeinheit die Übertragung von Füllparametem automatisch und/oder auf Abruf tätigen kann.

11. Einrichtung (3) gemäss einem der Ansprüche 1 bis 10, welche eine Kommunikationsschnittstelle zum Datenaustausch mit anderen ähnlichen Einrichtungen (3) aufweist, wobei Füllniveaudaten der anderen Einrichtungen mittels der genannten Fernmeldeeinheit an die Steuerzentrale übertragbar sind,

12. System zur Überwachung des Füllniveaus angehäufter, zu entleerender bzw. zu behandelnder Materialien (6) in einer Mehrzahl von Behältern (1) bzw. Sammelstellen, wobei das System:
eine Mehrzahl von Überwachungseinrichtungen (3), gemäss einem der Ansprüche 1 bis 11, aufweist, mittels welcher die aktuellen Füllniveaus der Materialien (6) in jedem Behälter (1) bzw. in jeder Sammelstelle ermittelbar sind,
eine Steuerzentrale (42) zur Steuerung der genannten Entleerung bzw. Behandlung der Materialien (6) aufweist,
wobei die Steuerzentrale (42) eine Optimierungseinheit (43) zur Optimierung des Verlaufs der genannten Entleerung bzw. Behandlung der Materialien (6) aufweist,
wobei mindestens eine der Überwachungseinrichtungen (3) eine Fernmeldeeinheit aufweist, mittels welcher ermittelte Füllniveaudaten an die Steuerzentrale (42) übertragbar sind,
**dadurch gekennzeichnet, dass**
jede der Überwachungseinrichtungen (3) darauf ausgelegt ist, mindestens einen prognostizierten Füllparameter des entsprechenden Behälters (1) bzw. der entsprechenden Sammelstelle zu ermitteln, wobei der mindestens eine prognostizierte Füllparameter einen Zeitpunkt bzw. einen Zeitrahmen umfasst, an welchem Zeitpunkt bzw. in welchem Zeitrahmen das Füllniveau gemäss dem mindestens einen Füllratenparameter ein vorbestimmtes Füllniveau erreichen wird,
die prognostizierten Füllparameter mittels der mindestens einen Fernmeldeeinheit an die Steuerzentrale (42) übertragbar sind, und
die Optimierungseinheit (43) darauf ausgelegt ist, den genannten Verlauf gemäss der prognostizierten Füllparameter zu optimieren.

13. System gemäss Anspruch 12, wobei
die Steuerzentrale (42) eine Abrufeinheit (49) aufweist, mittels welcher die prognostizierten Füllparameter von den Überwachungseinrichtungen (3) abrufbar sind, und
die Optimierungseinheit (43) darauf ausgelegt ist, in den optimierten Verlauf nur diejenigen Überwachungseinrichtungen (3) zu berücksichtigen, die gemäss der prognostizierten Füllparameter zu einem geplanten Entleerungs- bzw. Behandlungszeitpunkt entleerungs- bzw. behandlungsbedürftig sein werden.

14. System gemäss Anspruch 12 oder 13, wobei jede der Überwachungseinrichtungen (3) eine Kommunikationsschnittstelle zum Datenaustausch mit einer oder mehreren der anderen Überwachungseinrichtungen (3) aufweist, wobei ermittelte Füllniveaudaten und/oder prognostizierte Füllparameter unter die Überwachungseinrichtungen (3) übertragbar sind, und wobei die prognostizierten Füllparameter zweier oder mehrerer Überwachungseinrichtungen (3) mittels der Fernmeldeeinheit einer der Überwachungseinrichtungen (3) an die Steuerzentrale (42) übertragbar sind.

## Claims

1. A device (3) for monitoring the filling level of materials (6) which have accumulated or which have to be emptied or respectively to be treated in a container (1) or respectively at a collection point, wherein the device (3):
has at least one first level sensor (4), by means of which a current filling level of the materials (6) can be determined,
has a telecommunication unit, by means of which determined filling level data can be transferred to a control center (21, 42),
**characterized in that**
the device (3) has a fill rate analysis unit (21) for detecting and/or determining at least one filling rate parameter, by means of which fill rate analysis unit at least one predicted filling parameter can be created, wherein the at least one predicted filling parameter comprises a time or respectively a time frame, at which time or respectively in which time frame the filling level will reach a predetermined filling level according to the at least one filling rate parameter, and
the at least one predicted filling parameter can be transferred by means of the telecommunication unit to the control center (21, 42).

2. The device (3) according to Claim 1, wherein the at least one filling rate parameter comprises at least one historic filling level value of the accumulated materials (6), which has been determined by the level sensor (4), and/or a seasonal, and/or a filling rate parameter related to a time, place or the surroundings.

3. The device (3) according to any one of Claims 1 or 2, wherein the at least one predicted filling parameter comprises a filling level, which filling level will be reached at a predetermined time or respectively in a predetermined time frame according to the at least one filling rate parameter.

4. The device (3) according to any one of Claims 1 to 3, wherein the telecommunication unit is designed to transmit the predicted filling parameter to the control center (42), if the at least one filling parameter and/or the predicted filling parameter reaches a predetermined value.

5. The device (3) according to any one of Claims 1 to 4, which has a control interface for controlling a functional module of the container (1), by means of which functional module at least one function of the container (1) or respectively of the collection point can be actuated, wherein the function is a steering, a sorting, a compacting, and/or a layering of the indicated materials (6).

6. The device (3) according to any one of Claims 1 to 5, which has a data interface for reading in an enable signal, which enable signal has an authentication and/or counting impulses.

7. The device (3) according to any one of Claims 1 to 6, wherein the predetermined filling level is a "full", an "almost full", an "almost empty" or an "empty" status.

8. The device (3) according to any one of Claims 1 to 7, wherein at least one of the modes "always on", "cyclically on", maintenance mode, test mode, self-diagnosis, firmware update and software update of the functional module can be selected by means of the control interface.

9. The device (3) according to any one of Claims 1 to 8, which has an input or respectively output interface for connecting to an audio output unit, a display unit, and/or to an input unit.

10. The device (3) according to any one of Claims 1 to 9,
wherein the telecommunication unit can effect the transfer of filling parameters automatically and/or on demand.

11. The device (3) according to any one of Claims 1 to 10, which has a communication interface for exchanging data with other similar devices (3), wherein filling level data of the other devices can be transferred to the control center by means of the indicated telecommunication unit.

12. A system for monitoring the filling level of materials (6) which have accumulated or which have to be emptied or respectively to be treated in a plurality of containers (1) or respectively collection points, wherein the system:
has a plurality of monitoring devices (3), according to any one of Claims 1 to 11, by means of which the current filling levels of the materials (6) in each container (1) or respectively in each collection point can be determined,
has a control center (42) for controlling the indicated emptying or respectively treatment of the materials (6),
wherein the control center (42) has an optimization unit (43) for optimizing the process of the indicated emptying or respectively treatment of the materials (6),
wherein at least one of the monitoring devices (3) has a telecommunication unit, by means of which determined filling level data can be transferred to the control center (42),
**characterized in that**
each of the monitoring devices (3) is designed to determine at least one predicted filling parameter of the corresponding container (1) or respectively of the corresponding collection point, wherein the at least one predicted filling parameter comprises a time or respectively a time frame, at which time or respectively in which time frame the filling level will reach a predetermined filling level according to the at least one filling rate parameter,
the predicted filling parameters can be transferred to the control center (42) by means of the at least one telecommunication unit, and
the optimization unit (43) is designed to optimize the indicated process according to the predicted filling parameters.

13. The system according to Claim 12, wherein
the control center (42) has a retrieval unit (49), by means of which the predicted filling parameters can be retrieved from the monitoring devices (3), and
the optimization unit (43) is designed to only consider, in the optimized process, those monitoring devices (3) which, according to the predicted filling parameters, will require emptying or respectively handling at a planned emptying or respectively handling time.

14. The system according to Claim 12 or 13, wherein each of the monitoring devices (3) has a communication interface for exchanging data with one or more of the other monitoring devices (3), wherein determined filling level data and/or predicted filling parameters can be transferred among the monitoring devices (3), and wherein the predicted filling parameters of two or more monitoring devices (3) can be transferred to the control center (42) by means of the telecommunication unit of one of the monitoring devices (3).

## Revendications

1. Appareil (3) pour la surveillance du niveau de remplissage de matériaux (6) accumulés, qui doivent être vidés ou respectivement traités dans un récipient (1) ou respectivement à un point de collecte, l'appareil (3) possédant:
au moins un premier capteur de niveau (4), au moyen duquel un niveau de remplissage actuel des matériaux (6) peut être déterminé,
une unité de télécommunication, au moyen de laquelle les données de niveau de remplissage déterminées peuvent être transférées vers une centrale de contrôle (21, 42),
**caractérisé en ce que**
l'appareil (3) possède une unité d'analyse de taux de remplissage (21) pour détecter et/ou déterminer au moins un paramètre de taux de remplissage, au moyen de laquelle au moins un paramètre de remplissage prévisionnel peut être créé, ledit au moins un paramètre de remplissage prévisionnel comprenant un instant ou respectivement une période de temps, au moment duquel ou respectivement durant laquelle le niveau de remplissage va atteindre un niveau de remplissage prédéterminé selon ledit au moins un paramètre de taux de remplissage, et
ledit au moins un paramètre de remplissage prévisionnel peut être transféré au moyen de l'unité de télécommunication vers la centrale de contrôle (21, 42).

2. Appareil (3) selon la revendication 1, dans lequel ledit au moins un paramètre de taux de remplissage comprend au moins une valeur de niveau de remplissage historique des matériaux accumulés (6), qui a été déterminé par le capteur de niveau (4), et/ou un paramètre de taux de remplissage saisonnier, et/ou un paramètre de taux de remplissage lié au temps, à un endroit ou à ses environs.

3. Appareil (3) selon l'une des revendications 1 ou 2, dans lequel ledit au moins un paramètre de remplissage prévisionnel comprend un niveau de remplissage qui sera atteint à un instant prédéterminé ou respectivement durant une période de temps prédéterminée selon ledit au moins un paramètre de taux de remplissage.

4. Appareil (3) selon l'une des revendications 1 à 3, dans lequel l'unité de télécommunication est conçue pour transmettre le paramètre de remplissage prévisionnel vers la centrale de contrôle (42) lorsque ledit au moins un paramètre de remplissage et/ou le paramètre de remplissage prévisionnel atteint une valeur prédéterminée.

5. Appareil (3) selon l'une des revendications 1 à 4, possédant par ailleurs une interface de contrôle pour contrôler un module fonctionnel du récipient (1), au moyen duquel module fonctionnel au moins une fonction du récipient (1) ou respectivement du point de collecte peut être actionné, la fonction consistant en un pilotage, un tri, un compactage, et/ou une superposition des matériaux (6) susmentionnés.

6. Appareil (3) selon l'une des revendications 1 à 5, possédant par ailleurs une interface de données pour la lecture d'un signal d'activation, qui contient une authentification et/ou des impulsions de comptage.

7. Appareil (3) selon l'une des revendications 1 à 6, dans lequel le niveau de remplissage prédéterminé est un état « plein », « presque plein », « presque vide » ou « vide ».

8. Appareil (3) selon l'une des revendications 1 à 7, dans lequel au moins l'un des modes parmi les modes suivants: « toujours activé », « activé de façon cyclique », mode de maintenance, mode de test, mode d'auto-diagnostic, mise à jour du microprogramme et mise à jour du logiciel du module fonctionnel peuvent être sélectionnés au moyen de l'interface de contrôle.

9. Appareil (3) selon l'une des revendications 1 à 8, possédant par ailleurs une interface d'entrée ou respectivement de sortie pour se connecter à une unité de sortie audio, une unité d'affichage, et/ou à une unité d'entrée.

10. Appareil (3) selon l'une des revendications 1 à 9, dans lequel l'unité de télécommunication peut effectuer le transfert des paramètres de remplissage automatiquement et/ou sur demande.

11. Appareil (3) selon l'une des revendications 1 à 10, qui possède une interface de communication pour échanger des données avec d'autres appareils similaires (3), les données de niveau de remplissage des autres appareils pouvant être transférées à la centrale de contrôle au moyen de l'unité de télécommunication susmentionnée.

12. Système pour la surveillance du niveau de remplissage de matériaux (6) accumulés ou qui doivent être vidés ou respectivement traités dans une pluralité de récipients (1) ou respectivement de points de collecte, le système possédant :
une pluralité d'appareils de surveillance (3) selon l'une des revendications 1 à 11, au moyen desquels les niveaux de remplissage actuels des matériaux (6) de chaque récipient (1) ou respectivement de chaque point de collecte peuvent être déterminés,
une centrale de contrôle (42) pour contrôler le vidage susmentionné ou respectivement le traitement des matériaux (6),
la centrale de contrôle (42) possédant une unité d'optimisation (43) pour optimiser le processus de vidage susmentionné ou respectivement le traitement des matériaux (6),
au moins un des appareils de surveillance (3) possédant une unité de télécommunication, au moyen de laquelle les données de niveau de remplissage déterminé peuvent être transférées à la centrale de contrôle (42),
**caractérisé en ce que**
chacun des appareils de surveillance (3) est conçu pour déterminer au moins un paramètre de remplissage prévisionnel du récipient correspondant (1) ou respectivement du point de collecte correspondant, ledit au moins un paramètre de remplissage prévisionnel comprenant un instant ou respectivement une période de temps, auquel moment duquel ou respectivement durant laquelle le niveau de remplissage va atteindre un niveau de remplissage prédéterminé selon au moins un paramètre de taux de remplissage,
les paramètres de remplissage prévisionnels pouvant être transférés vers la centrale de contrôle (42) au moyen au moins de l'unité de télécommunication, et
l'unité d'optimisation (43) étant conçue pour optimiser le processus indiqué selon les paramètres de remplissage prévisionnels.

13. Système selon la revendication 12, dans lequel
la centrale de contrôle (42) possède une unité de récupération (49), au moyen de laquelle les paramètres de remplissage prévisionnels peuvent être consultés depuis les appareils de surveillance (3) et
l'unité d'optimisation (43) est conçue pour ne considérer seulement, dans le cadre d'un processus optimisé, que les appareils de surveillance (3) qui, selon les paramètres de remplissage prévisionnels, vont requérir un vidage ou respectivement un traitement à un instant de vidage planifié ou respectivement une période de traitement.

14. Système selon la revendication 12 ou 13, dans lequel chacun des appareils de surveillance (3) possède une interface de communication pour échanger des données avec un ou plusieurs des autres appareils de surveillance (3), les données de niveau de remplissage déterminés et/ou les paramètres de remplissage prévisionnels pouvant être transférés entre les appareils de surveillance (3), et les paramètres de remplissage prévisionnels de deux appareils de surveillance (3) ou plus peuvent être transférés vers la centrale de contrôle (42) au moyen de l'unité de télécommunication de l'un des appareils de surveillance (3).
